# EUROPEAN PATENT APPLICATION

(11) **EP 4 787 507 A1**
(43) Date of publication of application: **05.08.2026**
(21) Application number: 24871465.1
(22) Date of filing: 18.07.2024
(51) Int. Cl.: H01M 8/18, H01M 8/04, H01M 8/0438, H01M 8/249

(54) **BATTERY**

(30) Priority: 27.09.2023 JP 2023164915
(71) Applicant: AISIN CORPORATION, Kariya-shi, Aichi 448-8650 (JP)
(72) Inventor: HATANO, Ryu, Kariya-shi, Aichi 448-8650 (JP); ISOGAI, Kazuo, Kariya-shi, Aichi 448-8650 (JP); NISHIOKA, Koki, Kariya-shi, Aichi 448-8650 (JP)
(74) Representative: Cabinet Beau de Loménie
(86) International application number: PCT/JP2024/025787
(87) International publication number: WO 2025/069661

(57) **Abstract**

A battery in which at least two cells that generate electric power through oxidation-reduction reactions by causing an electrolyte solution to flow at least through anodes are electrically connected in series includes an inlet portion through which the electrolyte solution flows into each of the anodes, an outlet portion through which the electrolyte solution flows out, and a control unit that controls a flow of the electrolyte solution. The inlet portion includes inlet-side switching valves that switch each of the cells between a communicating state in which the electrolyte solution is circulated and a non-communicating state in which circulation of the electrolyte solution is blocked. The control unit controls opening and closing of the inlet-side switching valves in conjunction with each other such that at least one of the cells is brought into the communicating state and the other of the cells is brought into the non-communicating state.

## Description

### TECHNICAL FIELD

The present disclosure relates to a battery that can achieve a higher voltage.

### BACKGROUND ART

Conventionally, there is known a liquid exchange battery (redox flow battery) in which an electrolyte solution is circulated through a cathode and/or an anode and charging and discharging are performed using oxidation-reduction reactions of an active material contained in the electrolyte solution. In such a battery, a plurality of cells is electrically connected in series or in parallel to achieve a higher voltage and a higher current of the battery. Further, the electrolyte solution can be used repeatedly, and the battery is highly durable.

Patent Document 1 describes a redox flow battery in which a plurality of cells is electrically connected in series. In Patent Document 1, an electrolyte solution that flows out of the cell located upstream flows into the cell located downstream and is supplied to each cell. A three-way valve is provided on a channel through which the electrolyte solution flows into each cell, and can be operated to prevent the electrolyte solution from flowing into a specific cell.

### Related Art Documents

### Patent Documents

Patent Document 1: Japanese Unexamined Patent Application Publication No. 2014-505976 (JP 2014-505976 A)

### SUMMARY OF THE INVENTION

### Problem to be Solved by the Invention

In Patent Document 1, the operation can be performed to prevent the electrolyte solution from flowing into a specific cell, but a short circuit via the electrolyte solution is likely to occur when the channel of the electrolyte solution between the cells is short.

Therefore, there is a demand for a battery in which a plurality of cells is electrically connected in series and a short circuit via an electrolyte solution does not occur.

### Means for Solving the Problem

A characteristic configuration of the battery according to the present disclosure is a battery in which at least two cells that generate electric power through oxidation-reduction reactions by causing an electrolyte solution to flow at least through anodes are electrically connected in series. The battery includes an inlet portion through which the electrolyte solution flows into each of the anodes, an outlet portion through which the electrolyte solution flows out, and a control unit that controls a flow of the electrolyte solution. The inlet portion includes inlet-side switching valves that switch each of the cells between a communicating state in which the electrolyte solution is circulated and a non-communicating state in which circulation of the electrolyte solution is blocked. The control unit controls opening and closing of the inlet-side switching valves in conjunction with each other such that at least one of the cells is brought into the communicating state and the other of the cells is brought into the non-communicating state.

In the case where two or more cells are electrically connected in series and an equipotential electrolyte solution flows into each cell, a short circuit via the electrolyte solution may occur between adjacent cells when the channel of the electrolyte solution between the cells is short. In this configuration, however, the inlet portion includes the inlet-side switching valves that switch each of the cells between the communicating state in which the electrolyte solution is circulated and the non-communicating state in which the circulation of the electrolyte solution is blocked. Therefore, when at least one of the cells is in the communicating state, the other of the cells can be brought into the non-communicating state. Thus, it is possible to cause a potential difference between the cells. Accordingly, it is possible to prevent the short circuit via the electrolyte solution between adjacent cells.

When the battery is discharged, the electrical energy of each cell is consumed. Therefore, the state of charge (SOC) of each cell decreases and the electric power available in the entire battery decreases. In view of this, the control unit controls the opening and closing of the inlet-side switching valves in conjunction with each other at regular intervals, thereby shifting the timing at which each cell is brought into the communicating state. Thus, the electrolyte solution in the charging state can flow into each cell at regular intervals to increase the SOC of each cell. Accordingly, the voltage of the entire battery can be kept constant.

In this way, the battery can prevent the short circuit via the electrolyte solution while achieving a higher voltage, and can keep a constant voltage as a whole.

### BRIEF DESCRIPTION OF THE DRAWINGS

[FIG. 1] FIG. 1 is a schematic configuration diagram of a battery according to a first embodiment.
[FIG. 2] FIG. 2 is a schematic configuration diagram of the battery according to the first embodiment.
[FIG. 3] FIG. 3 is a diagram showing transition of voltages over time.
[FIG. 4] FIG. 4 is a schematic configuration diagram of a battery according to a second embodiment.
[FIG. 5] FIG. 5 is a schematic diagram of an inlet-side switching valve according to the second embodiment.

### MODES FOR CARRYING OUT THE INVENTION

Hereinafter, embodiments of a battery according to the present disclosure will be described with reference to the drawings. However, the present disclosure is not limited to the following embodiments, and various modifications may be made without departing from the spirit and scope of the present disclosure.

### [First Embodiment]

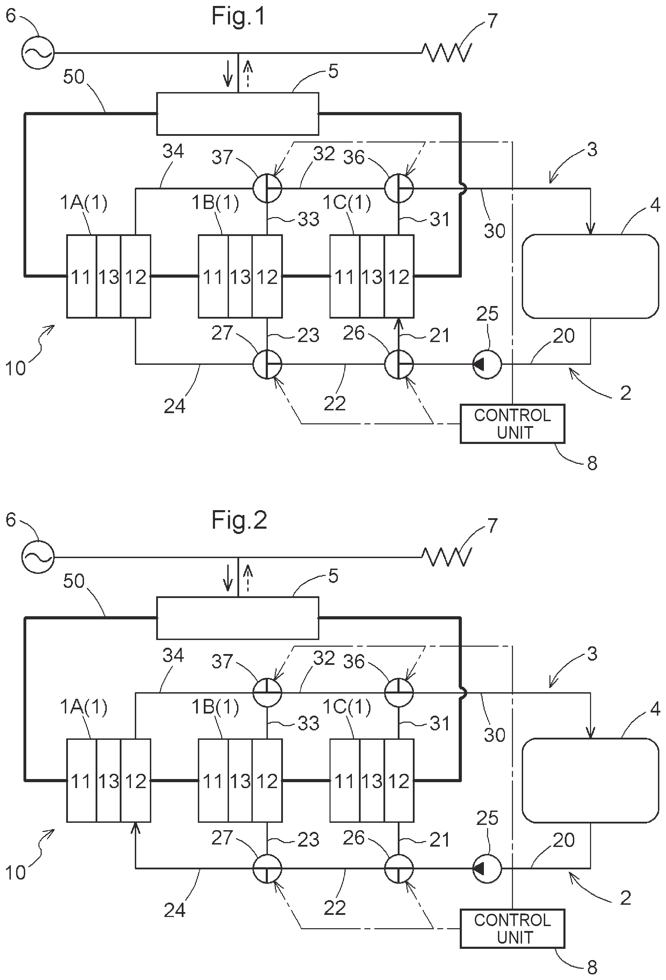

A battery 10 (redox flow battery) according to a first embodiment will be described with reference to FIG. 1. FIG. 1 is a diagram showing a schematic configuration of the battery 10. The battery 10 includes at least two (three in the present embodiment) cells 1, an inlet portion 2 through which an electrolyte solution that is an anode fluid flows into anodes 12, an outlet portion 3 through which the electrolyte solution flows out of the anodes 12, and an electrolyte solution tank 4. The battery 10 is connected to a power supply 6 or a load 7 via a power converter 5, and is charged by receiving electric power supplied from the power supply 6 during charging and supplies electric power to the load 7 during discharging.

Each cell 1 includes a cathode 11 that houses a cathode electrode and is supplied with a cathode fluid containing a cathode active material, the anode 12 that houses an anode electrode and is supplied with the electrolyte solution containing an anode active material, and an ion exchange membrane 13 that separates the cathode 11 and the anode 12. In the cathode 11, an oxidation reaction occurs during a charging operation such that the cathode active material in a reduced state changes to an oxidized state, and a reduction reaction occurs during a discharging operation such that the cathode active material in an oxidized state changes to a reduced state. In the anode 12, a reduction reaction occurs during a charging operation such that the anode active material in an oxidized state changes to a reduced state, and an oxidation reaction occurs during a discharging operation such that the anode active material in a reduced state changes to an oxidized state. The battery 10 is charged and discharged using the oxidation-reduction reactions of the cathode active material and the anode active material.

The ion exchange membrane 13 is an ion exchange membrane through which electrons are not permeable but, for example, hydrogen ions are permeable. The ion exchange membrane 13 is permeated by protons or hydroxide ions generated at the cathode 11 or the anode 12, thereby maintaining the electrical neutrality of the cathode fluid and the anode fluid.

As shown in FIG. 1, the plurality of cells 1 is electrically connected in series by conductor wires 50. Hereinafter, the three cells 1 will be described as cells 1A, 1B, 1C when they are distinguished.

For the cathode fluid and the anode fluid, known electrolyte solutions containing active materials such as Fe/Cr-based or vanadium-based materials can be used. However, the electrolyte solution to be used as the anode fluid is preferably an electrolyte solution in which an anode active material such as a hydrogen storage alloy or zinc is dispersed. In the electrolyte solution in which a hydrogen storage alloy or zinc is dispersed, the resistance of the electrolyte solution itself can be reduced, and therefore the electrical conductivity can be increased. The composition of the hydrogen storage alloy is not limited as long as hydrogen gas can be stored. When the active material contains a Fe/Cr-based or vanadium-based material, the solvent of the electrolyte solution is preferably an acidic aqueous solution such as an aqueous sulfuric acid (H₂SO₄) solution or an aqueous phosphoric acid (H₃PO₄) solution. When a hydrogen storage alloy or a metal such as zinc is dispersed in the active material, an alkaline aqueous solution is preferable, such as an aqueous sodium hydroxide (NaOH) solution or an aqueous potassium hydroxide (KOH) solution. Air or oxygen may be used as the cathode fluid, and the cathode 11 can be used as an air electrode. Hereinafter, the cathode fluid will be referred to as air, and the anode fluid will be referred to as electrolyte solution.

The inlet portion 2 through which the electrolyte solution flows into the anodes 12 includes a channel 20 that is connected to the electrolyte solution tank 4 and through which the electrolyte solution flows, and a pump 25 that is provided on the channel 20 and sends out the electrolyte solution. The channel 20 is connected to a channel 21 and a channel 22 via an inlet-side switching valve 26. The channel 21 is connected to the anode 12 of the cell 1C. The channel 22 is connected to a channel 23 and a channel 24 via an inlet-side switching valve 27. The channel 23 is connected to the anode 12 of the cell 1B. The channel 24 is connected to the anode 12 of the cell 1A. That is, the electrolyte solution is supplied to the cells 1 in parallel. The inlet-side switching valves 26, 27 may be two-way valves or three-way valves.

The outlet portion 3 through which the electrolyte solution flows out of the anodes 12 includes a channel 30 that is connected to the electrolyte solution tank 4 and through which the electrolyte solution flows. The channel 30 is connected to a channel 31 and a channel 32 via an outlet-side switching valve 36. The channel 32 is connected to a channel 33 and a channel 34 via an outlet-side switching valve 37. The outlet-side switching valves 36, 37 are, for example, two-way valves or three-way valves. The channel 31, the channel 33, and the channel 34 are connected to the anode 12 of the cell 1C, the anode 12 of the cell 1B, and the anode 12 of the cell 1A, respectively. The electrolyte solution flows out of the cells 1 in parallel and flows into the electrolyte solution tank 4.

When the battery 10 is charged and discharged, the anode active material in a reduced state or an oxidized state flows into the electrolyte solution tank 4 from the outlet portion 3. Therefore, the anode active materials in the reduced state and the oxidized state are mixed in the electrolyte solution tank 4. Therefore, the electrolyte solution tank 4 may include a separator (not shown) that suppresses the mixing. Since the separator can suppress the mixing of the anode active material in the reduced state and the anode active material in the oxidized state, the concentration of the electrolyte solution can be kept constant.

The channels provided in the inlet portion 2 and the outlet portion 3 may be formed integrally with a housing that houses the cells 1. The battery 10 similarly includes an inlet portion (not shown) through which air flows into the cathodes 11, and an outlet portion (not shown) through which air flows out of the cathodes 11. The inlet portion of the cathodes 11 may include an air pump that sends out air.

The inlet portion 2 and the outlet portion 3 allow the electrolyte solution and air to circulate through the cells 1, thereby causing oxidation-reduction reactions in the cells 1. When the inlet-side switching valve 26 connects the channel 20 to the channel 21 and the inlet-side switching valve 27 connects the channel 22 to the channel 23 and the channel 24, the electrolyte solution flows into all of the cell 1A, the cell 1B, and the cell 1C simultaneously. At this time, the potentials of the electrolyte solution flowing into the cells 1 are equal. Therefore, a short circuit via the electrolyte solution is likely to occur between the cells when the channels of the electrolyte solution between the cell 1A and the cell 1B connected in series and between the cell 1B and the cell 1C connected in series are short. In particular, when an electrolyte solution in which a hydrogen storage alloy or zinc is dispersed is used as the electrolyte solution, the resistance of the electrolyte solution itself is low. Therefore, the electrolyte solution itself is electrically conductive, and the short circuit via the electrolyte solution is likely to be a problem. In view of this, the battery 10 of the present embodiment includes a control unit 8 that controls the opening and closing of the inlet-side switching valves 26, 27 and the outlet-side switching valves 36, 37 in conjunction with each other to prevent the short circuit via the electrolyte solution, and switches each cell 1 between a communicating state in which the electrolyte solution is circulated and a non-communicating state in which the circulation of the electrolyte solution is blocked.

In the communicating state in which the electrolyte solution circulates only through the cell 1A, the control unit 8 switches the inlet-side switching valves 26, 27 to connect the channel 20 to the channel 22 and to connect the channel 22 to the channel 24 (see FIG. 2). At this time, the control unit 8 may switch the outlet-side switching valves 36, 37 in conjunction with the inlet-side switching valves 26, 27. When the control unit 8 switches the outlet-side switching valves 36, 37 to connect the channel 34 to the channel 32 and to connect the channel 32 to the channel 30, the electrolyte solution circulates through the electrolyte solution tank 4, the channels 20, 22, 24, the cell 1A, and the channels 34, 32, 30. That is, the cell 1A is in the communicating state in which the electrolyte solution circulates, and the cell 1B and the cell 1C are in the non-communicating state in which the electrolyte solution does not circulate. Therefore, the cells 1 are not connected to each other via the electrolyte solution, and thus no short circuit occurs between the cells 1. The control unit 8 preferably operates the pump 25 when bringing each cell 1 into the communicating state.

Similarly, in the communicating state in which the electrolyte solution circulates only through the cell 1B, the control unit 8 switches the inlet-side switching valves 26, 27 to connect the channel 20 to the channel 22 and to connect the channel 22 to the channel 23. Then, the outlet-side switching valves 36, 37 are switched in synchronization with the inlet-side switching valves 26, 27 to connect the channel 33 to the channel 32 and to connect the channel 32 to the channel 30. Thus, the electrolyte solution circulates through the electrolyte solution tank 4, the channels 20, 22, 23, the cell 1B, and the channels 33, 32, 30, and the electrolyte solution circulates through the cell 1B. In the communicating state in which the electrolyte solution circulates only through the cell 1C, the control unit 8 switches the inlet-side switching valves 26, 27 and the outlet-side switching valves 36, 37 in synchronization with each other, thereby causing the electrolyte solution to circulate through the electrolyte solution tank 4, the channels 20, 21, the cell 1C, and the channels 31, 30 (see FIG. 1). In the outlet portion 3, check valves may be disposed in the channels 31, 33, 34 instead of the outlet-side switching valves 36, 37. Even in this case, the inlet-side switching valves 26, 27 are switched in conjunction with each other such that only one cell 1 can be brought into the communicating state. Thus, no short circuit occurs via the electrolyte solution flowing through each channel of the outlet portion 3.

In the communicating state of the electrolyte solution, the electrolyte solution in each cell 1 in which the amount of the anode active material in the reduced state has increased or decreased along with charging or discharging of the battery 10 flows into the electrolyte solution tank 4, and the electrolyte solution in the electrolyte solution tank 4 in which the amount of the anode active material has decreased or increased flows into each cell 1. By circulating the electrolyte solution while bringing each cell 1 into the communicating state, it is possible to supply the anode active material in the oxidized state or the reduced state to each cell 1. The air circulation in the cathode 11 of each cell 1 may be performed in conjunction with the anode 12, or may be performed such that the charging states of the anode active material and the cathode active material are made equivalent to each other.

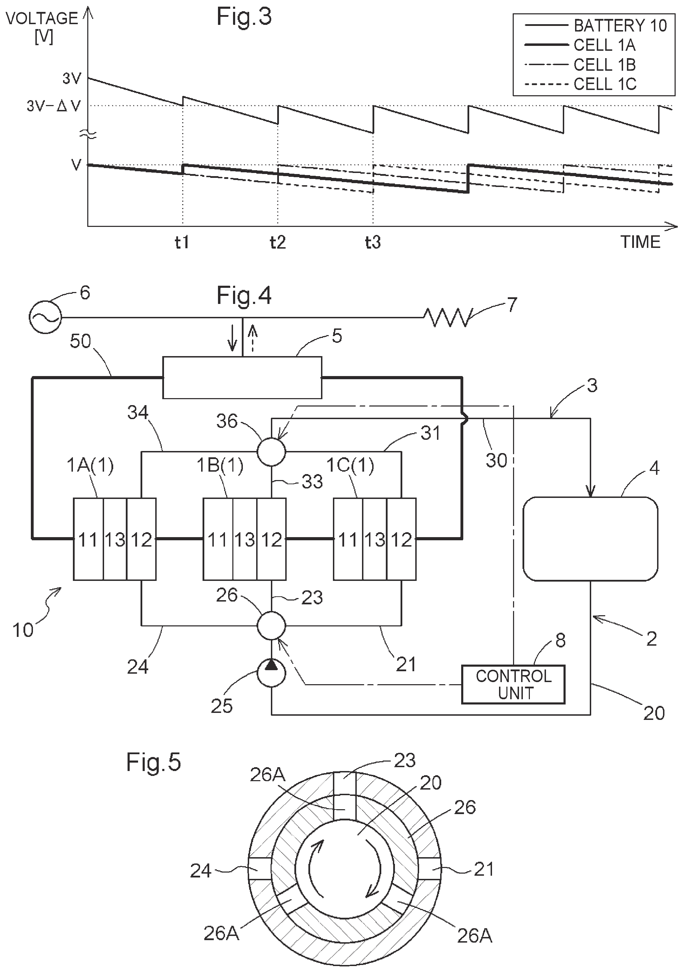

Next, the circulation operation of the electrolyte solution will be described with reference to FIGS. 1 to 3. In an initial state, the channel 20 and the channel 22 are not connected, and the channel 22 and the channel 24 are not connected. That is, each cell 1 is not connected to the other cells 1 via the channels, and each cell 1 is in the non-communicating state in which the circulation of the electrolyte solution is blocked. In the initial state, the battery 10 is in a fully charged state by being supplied with electric power from the power supply 6, the cathode active material in each cell 1 is in the oxidized state, and the anode active material is in the reduced state. All the anode active material in the electrolyte solution tank 4 is also in the reduced state, and all the cathode active material in a cathode fluid tank storing air as the cathode fluid is also in the oxidized state. At this time, the voltage of the entire battery 10 is the sum of voltages V [V] of the cells 1, and therefore the voltage of the entire battery 10 in the present embodiment is 3V [V]. When the battery 10 is discharged by supplying electric power to the load 7, the amount of the cathode active material in the reduced state increases in the cathode 11 of each cell 1, and the amount of the anode active material in the oxidized state increases in the anode 12. Therefore, the state of charge (SOC) of each cell 1 decreases, and as shown in FIG. 3, the voltage of each cell 1 at time t1 that is Δt seconds after the battery 10 has started discharging drops by ΔV / 3 [V] from V [V]. The SOC indicates the remaining power storage amount, and is expressed, for example, on a scale of 0 to 100% as a ratio of a current power storage amount to a power storage amount in the fully charged state.

As shown in FIG. 2, at time t1 that is Δt seconds after the battery 10 has started discharging, the control unit 8 switches the inlet-side switching valves 26, 27 to connect the channel 20 to the channel 22 and to connect the channel 22 to the channel 24 such that the cell 1A is brought into the communicating state in which the electrolyte solution circulates. The outlet-side switching valves 37, 36 are switched to connect the channel 34 to the channel 32 and to connect the channel 32 to the channel 30, and the pump 25 is operated. Therefore, the anode active material in the reduced state flows from the electrolyte solution tank 4 into the cell 1A, and thus the SOC of the cell 1A increases. As shown in FIG. 3, the voltage of the cell 1A recovers from V - ΔV / 3 [V] to V [V]. At this time, the voltage of each of the cell 1B and the cell 1C is V - ΔV / 3 [V], and thus the voltage of the entire battery 10 is 3V - 2ΔV / 3 [V].

Next, at time t2 that is Δt seconds after the cell 1A has been brought into the communicating state, the control unit 8 switches the inlet-side switching valves 26, 27 and the outlet-side switching valves 36, 37 such that the cell 1A is brought into the non-communicating state in which the electrolyte solution does not circulate and the cell 1B is brought into the communicating state in which the electrolyte solution circulates. Similarly to time t1, the anode active material in the reduced state flows from the electrolyte solution tank 4 into the cell 1B, and thus the SOC of the cell 1B increases. The voltage of the cell 1B recovers from V - 2ΔV / 3 [V] to V [V]. At this time, the voltage of the cell 1A is V - ΔV / 3 [V] and the voltage of the cell 1C is V - 2Δ / 3 [V]. Thus, the voltage of the entire battery 10 is 3V - ΔV [V].

At time t3 that is Δt seconds after the cell 1B has been brought into the communicating state, the control unit 8 switches the inlet-side switching valves 26, 27 and the outlet-side switching valves 36, 37 such that the cell 1B is brought into the non-communicating state in which the electrolyte solution does not circulate and the cell 1C is brought into the communicating state in which the electrolyte solution circulates (see FIG. 1). At time t3, similarly to time t1, the anode active material in the reduced state flows into the cell 1C, and thus the voltage of the cell 1C recovers from V - ΔV [V] to V [V]. At this time, the voltage of the cell 1A is V - 2ΔV / 3 [V] and the voltage of the cell 1C is V - Δ / 3 [V]. Thus, the voltage of the entire battery 10 is 3V - ΔV [V]. The control unit 8 repeats the operation of bringing the cell 1 having the lowest voltage among the cells 1 into the communicating state every Δt seconds. Thus, the voltage of the entire battery 10 can be kept constant. The timing at which each cell 1 is switched to the communicating state may be determined depending on the number of the cells 1 in the battery 10. For example, when n cells 1 are connected, each cell 1 can be switched between the communicating state and the non-communicating state every time the voltage of the cell 1 drops by V / n [V].

As the discharging of the battery 10 progresses, most of the anode active material circulating in the battery 10 is brought into the oxidized state, and most of the cathode active material is brought into the reduced state. When the operation of the load 7 is stopped or the SOC of the battery 10 decreases, the battery 10 stops discharging and performs power generation using the electric power supplied from the power supply 6. The battery 10 performs power generation by behavior opposite to that during the charging described above. That is, the control unit 8 switches the inlet-side switching valves 26, 27 and the outlet-side switching valves 36, 37 such that one of the cells 1 is brought into the communicating state in which the electrolyte solution circulates. In the communicating state, the anode active material in the oxidized state flows from the electrolyte solution tank 4 into the cell 1, the power generation reaction progresses in the cell 1, and the anode active material brought into the reduced state in the cell 1 flows into the electrolyte solution tank 4. By switching the communicating state and the non-communicating state of each cell 1, the control unit 8 returns the anode active material in the reduced state to the electrolyte solution tank 4 without causing the short circuit between adjacent cells 1 via the electrolyte solution, thereby efficiently performing power generation. The timing at which each cell 1 is switched between the communicating state and the non-communicating state during power generation may be different from that during discharging.

### [Second Embodiment]

FIG. 4 is a schematic configuration diagram of a battery 10 according to a second embodiment. In the second embodiment, one inlet-side switching valve 26 and one outlet-side switching valve 36 are disposed. The inlet-side switching valve 26 in the present embodiment is a rotary valve as shown in FIG. 5, and the switching is performed by the control unit 8. That is, the control unit 8 rotates the inlet-side switching valve 26 to connect any one of a plurality of outlets 26A (three in the present embodiment) through which the electrolyte solution flows out to any one of the channels of the inlet portion 2, thereby bringing each cell 1 into the communicating state in which the electrolyte solution circulates. Therefore, the cells 1 are switched between the communicating state and the non-communicating state in conjunction with each other uniaxially. When the outlet 26A is not connected to any of the channels, the electrolyte solution does not circulate through the cells 1 and the pump 25 does not operate. The configuration of the outlet-side switching valve 36 can be the same as that of the inlet-side switching valve 26. Only one outlet 26A may be provided. Any type of the inlet-side switching valve 26 and the outlet-side switching valve 36 may be used as long as the electrolyte solution can flow only in one direction. Since the other configurations are the same as those in the first embodiment, detailed description of the same configurations will be omitted.

In the present embodiment, one inlet-side switching valve 26 switches the connection between the channel 20 and the other channels, and one outlet-side switching valve 36 switches the connection between the channel 30 and the other channels. Therefore, there is no need to use a plurality of switching valves in each of the inlet portion 2 and the outlet portion 3. Thus, the number of components of the battery 10 can be reduced, and the battery 10 can be downsized. Since the control unit 8 need not control a plurality of switching valves in conjunction with each other, the configuration of the control unit 8 is simple, and the manufacturing cost of the battery 10 can be reduced.

The following configurations are possible for the embodiments described above.
(1) A battery 10 in which at least two cells 1 that generate electric power through oxidation-reduction reactions by causing an electrolyte solution to flow at least through anodes 12 are electrically connected in series includes an inlet portion 2 through which the electrolyte solution flows into each of the anodes 12, an outlet portion 3 through which the electrolyte solution flows out, and a control unit 8 that controls a flow of the electrolyte solution. The inlet portion 2 includes inlet-side switching valves 26, 27 that switch each of the cells 1 between a communicating state in which the electrolyte solution is circulated and a non-communicating state in which circulation of the electrolyte solution is blocked. The control unit 8 controls opening and closing of the inlet-side switching valves 26, 27 in conjunction with each other such that at least one of the cells 1 is brought into the communicating state and the other of the cells 1 is brought into the non-communicating state.

In the case where two or more cells 1 are electrically connected in series and an equipotential electrolyte solution flows into each cell 1, a short circuit via the electrolyte solution may occur between adjacent cells 1 when the channel of the electrolyte solution between the cells is short. In this configuration, however, the inlet portion 2 includes the inlet-side switching valves 26, 27 that switch each of the cells 1 between the communicating state in which the electrolyte solution is circulated and the non-communicating state in which the circulation of the electrolyte solution is blocked. Therefore, when at least one of the cells 1 is in the communicating state, the other of the cells 1 can be brought into the non-communicating state. Thus, it is possible to cause a potential difference between the cells 1. Accordingly, it is possible to prevent the short circuit via the electrolyte solution between adjacent cells 1.

When the battery 10 in which two or more cells 1 are electrically connected in series is discharged, the electrical energy of the cells 1 is consumed. Therefore, the state of charge (SOC) of each cell 1 decreases and the electric power available in the entire battery 10 decreases. In view of this, the control unit 8 controls the opening and closing of the inlet-side switching valves 26, 27 in conjunction with each other at regular intervals, thereby shifting the timing at which each cell 1 is brought into the communicating state. Thus, the electrolyte solution in the charging state can flow into each cell 1 at regular intervals to increase the SOC of each cell 1. Accordingly, the voltage of the entire battery 10 can be kept constant.

(2) In the battery 10 according to (1), it is preferable that the control unit 8 control the opening and closing of the inlet-side switching valves 26, 27 in conjunction with each other such that only one of the cells 1 is brought into the communicating state and the other of the cells 1 is brought into the non-communicating state.

When the control unit 8 controls the opening and closing of the inlet-side switching valves 26, 27 such that only one of the cells 1 is brought into the communicating state and the other of the cells 1 is brought into the non-communicating state, it is possible to reliably suppress the short circuit via the electrolyte solution between the cells.

(3) In the battery 10 according to (1) or (2), it is preferable that the inlet-side switching valves 26, 27 be operated in conjunction with each other uniaxially.

When the inlet-side switching valves 26, 27 are operated in conjunction with each other uniaxially, there is no need to dispose the plurality of inlet-side switching valves 26, 27. Therefore, the configuration of the battery 10 is simple, and the number of components can be reduced. Thus, the battery 10 can be downsized.

(4) In the battery 10 according to (3), it is preferable that the inlet portion 2 include a plurality of channels 21, 23, 24 connecting the inlet-side switching valve 26, 27 and each of the cells 1, the inlet-side switching valve 26, 27 include an outlet 26A connectable to each of the plurality of channels 21, 23, 24 along with rotation about an axis, and the control unit 8 switch the communicating state and the non-communicating state by rotating the inlet-side switching valve 26, 27.

When the inlet-side switching valve 26, 27 includes the outlet 26A connectable to each of the channels 21, 23, 24 along with rotation, the connection between the outlet 26A and the channels 21, 23, 24 can be switched by rotating the inlet-side switching valve 26, 27. Thus, it is possible to simplify the operation of switching the communicating state and the non-communicating state of the cells 1. Since there is no need to dispose the inlet-side switching valves 26, 27 for the channels 21, 23, 24, the configuration of the battery 10 can be made compact.

(5) In the battery 10 according to any one of (1) to (4), it is preferable that the control unit 8 bring the cell 1 having a lowest voltage into the communicating state at predetermined time intervals.

The control unit 8 controls the opening and closing of the inlet-side switching valves 26, 27 in conjunction with each other at the predetermined time intervals, thereby shifting the timing at which each cell 1 is brought into the communicating state. Thus, the electrolyte solution in the charging state can flow into each cell 1 at the predetermined time intervals to increase the SOC of each cell 1. Accordingly, the voltage of the entire battery 10 can be kept constant.

(6) In the battery 10 according to any one of (1) to (5), it is preferable that the outlet portion 3 include outlet-side switching valves 36, 37 that switch the communicating state and the non-communicating state in synchronization with the inlet-side switching valves 26, 27, and the control unit 8 control the opening and closing of the inlet-side switching valves 26, 27 and the outlet-side switching valves 36, 37 in conjunction with each other.

When the outlet portion 3 includes the outlet-side switching valves 36, 37 that switch the communicating state and the non-communicating state in synchronization with the inlet-side switching valves 26, 27, it is possible to prevent the short circuit via the electrolyte solution even in the outlet portion 3. By synchronizing with the inlet-side switching valves 26, 27, it is possible to prevent damage to the ion exchange membrane 13 caused by a local increase in internal pressure within the cell 1 due to a mismatch in the opening and closing timings of the inlet-side switching valves 26, 27 and the outlet-side switching valves 36, 37.

(7) In the battery 10 according to any one of (1) to (6), it is preferable that a cathode 11 be an air electrode.

When the cathode 11 is the air electrode, it is possible to prevent mixing of the electrolyte solutions in the cell 1. Further, the battery 10 can be made lighter and formed at low costs.

### [Other Embodiments]

(a) In the above embodiments, the cathode fluid is air. However, the cathode fluid may be an electrolyte solution. Similarly to the anode 12, the cathode 11 may include an inlet portion through which the electrolyte solution flows and an outlet portion through which the electrolyte solution flows out. The control unit 8 may switch the communicating state and the non-communicating state of the cathode fluid in addition to the anode fluid.
(b) In the above embodiments, the channel 22 is connected to the channel 20 via the inlet-side switching valve 26, and the channel 24 is connected to the channel 22 via the inlet-side switching valve 27, but the channel 22 and the channel 24 may be connected to the electrolyte solution tank 4. In this case, it is appropriate that the channel 20 be connected only to the channel 21 via the inlet-side switching valve 26, the channel 22 be connected only to the channel 23 via the inlet-side switching valve 27, and the channel 24 be provided with another inlet-side switching valve. When the control unit 8 controls the opening and closing of these inlet-side switching valves in conjunction with each other, it is possible to prevent the short circuit via the electrolyte solution in each cell 1. The same may apply to the outlet portion 3.
(c) In the above embodiments, the electrolyte solution tank 4 includes the separator that separates the anode active material in the reduced state and the anode active material in the oxidized state. However, the battery 10 may include tanks that separately store the anode active material in the reduced state and the anode active material in the oxidized state.
(d) In the above embodiments, the control unit 8 controls the inlet-side switching valves 26, 27 in conjunction with each other, but they need not be operated in conjunction with each other. In this case, the control unit 8 controls the opening and closing of the outlet-side switching valves 36, 37 in synchronization with the inlet-side switching valves 26, 27. Therefore, it is possible to adjust the flow rate of the electrolyte solution flowing through the cell 1 and prevent damage to the ion exchange membrane 13 caused by a local increase in internal pressure of the cell 1.
(e) In the above embodiments, when the cell 1A is in the communicating state, either the cell 1B or the cell 1C may be in the communicating state. This is because, when the channels 23, 24 between the cell 1A and the cell 1B and the channels 21, 22, 24 between the cell 1A and the cell 1C are long, the short circuit via the electrolyte solution will not occur even though the cell 1A and the cell 1B or the cell 1C are in the communicating state.

### INDUSTRIAL APPLICABILITY

The present disclosure is applicable to a battery that can achieve a higher voltage.

### Description of the Reference Numerals

1: cell, 2: inlet portion, 3: outlet portion, 8: control unit, 10: battery, 11: cathode, 12: anode, 26: inlet-side switching valve, 27: inlet-side switching valve, 36: outlet-side switching valve, 37: outlet-side switching valve

## Claims

1. A battery in which at least two cells that generate electric power through oxidation-reduction reactions by causing an electrolyte solution to flow at least through anodes are electrically connected in series, the battery comprising:
an inlet portion through which the electrolyte solution flows into each of the anodes;
an outlet portion through which the electrolyte solution flows out; and
a control unit that controls a flow of the electrolyte solution, wherein
the inlet portion includes inlet-side switching valves that switch each of the cells between a communicating state in which the electrolyte solution is circulated and a non-communicating state in which circulation of the electrolyte solution is blocked, and
the control unit controls opening and closing of the inlet-side switching valves in conjunction with each other such that at least one of the cells is brought into the communicating state and the other of the cells is brought into the non-communicating state.

2. The battery according to claim 1, wherein the control unit controls the opening and closing of the inlet-side switching valves in conjunction with each other such that only one of the cells is brought into the communicating state and the other of the cells is brought into the non-communicating state.

3. The battery according to claim 1, wherein the inlet-side switching valves are operated in conjunction with each other uniaxially.

4. The battery according to claim 3, wherein:
the inlet portion includes a plurality of channels connecting the inlet-side switching valve and each of the cells;
the inlet-side switching valve includes an outlet connectable to each of the plurality of channels along with rotation about an axis; and
the control unit switches the communicating state and the non-communicating state by rotating the inlet-side switching valve.

5. The battery according to claim 1, wherein the control unit brings the cell having a lowest voltage into the communicating state at predetermined time intervals.

6. The battery according to claim 1, wherein:
the outlet portion includes outlet-side switching valves that switch the communicating state and the non-communicating state in synchronization with the inlet-side switching valves; and
the control unit controls the opening and closing of the inlet-side switching valves and the outlet-side switching valves in conjunction with each other.

7. The battery according to any one of claims 1 to 6, wherein a cathode is an air electrode.
